# EUROPEAN PATENT SPECIFICATION

(11) **EP 0 176 085 B1**
(45) Date of publication and mention of the grant of the patent: **14.04.1993**
(21) Application number: 85112129.3
(22) Date of filing: 24.09.1985
(51) Int. Cl.: C07F 7/18, C07F 7/12

(54) **4-Substituted-1,2,3,6-tetrahydrophthalic acid anhydride and production process thereof**
4-Substituiertes-1,2,3,6-Tetrahydrophthalsäure-Anhydrid und Verfahren zu dessen Produktion
Anhydride de l'acide 4-substitué-1,2,3,6 tétrahydrophtalique et son procédé de production

(30) Priority: 25.09.1984 JP 199855/84
(43) Date of publication of application: 02.04.1986
(73) Proprietor: NISSAN CHEMICAL INDUSTRIES LTD., Chiyoda-ku Tokyo (JP)
(72) Inventor: Sato, Fumie, 7-2 Chigasaki-shi Kanagawa-ken (JP)
(74) Representative: TER MEER STEINMEISTER & PARTNER GbR

(56) References cited:
- WO-A-84/00366
- DE-B- 1 114 491
- TETRAHEDRON LETTERS, no. 36, 1978, pages 3323-3324, Pergamon Press Ltd., GB; D.G. BATT et al.: "Synthesis and cycloaddition reactions of 2-triethylsilyl-1,3-butadiene"
- CHEMISTRY AND INDUSTRY, 15th October 1984, pages 743-744; F. SATO et al.: "New silane coupling agents with the buta-1,3-diene moiety"

## Description

The subject matter of the present invention are 4-substituted-1,2,3,6-tetrahydrophthalic anhydrides and a process for their manufacture.

2-(Triethyl)silyl-1,3-butadiene and its use for the manufacture of 4-(triethyl)silyl-1,2,3,6-tetrahydrophthalic acid anhydride through the reaction with maleic acid anhydride is already known (Tetrahedron Letters, 36 (1978), 3323-3324).

DE-B-1 114 491 discloses a process for the manufacture of cyclopentadienyl trihalosilane-maleic acid anhydride adducts by reacting cyclopentadienyl trihalogenosilane or ethyl derivatives thereof with maleic acid anhydride. It is stated that these compounds can be used as film forming agents and binders for glass fibers for the manufacture of laminates.

WO 84/00366 describes silyl norbornane anhydrides comprising alkoxy substituted silyl residues, which may be used as intermediates for making polyimide-polydiorganosiloxane block copolymers and as adhesion promotors for room temperature vulcanizable organopolysiloxane compositions.

2-Substituted-1,3-butadiene compounds, for example 2-(trichloro)silyl-1,3-butadiene, 2-(trimethoxy)silyl-1,3-butadiene, 2-(methoxydimethyl) silyl-1,3-butadiene and 2-(dimethoxymethyl)silyl-1,3-butadiene and a process for their manufacture are known as well as their utility as plasticizers for vinylchloride resins or the like or as silane coupling agents are disclosed in JP-A-33 733/1984.

The object of the present invention now is the provision of 4-substituted-1,2,3,6-tetraphydrophthalic acid anhydrides having both functional silyl groups and functional acid anhydride groups and which can be used specifically as silane coupling agents.

The subject matter of the present application therefore are the 4-substituted-1,2,3,6-tetrahydrophthalic acid anhydrides represented by the following structural formula [I]: 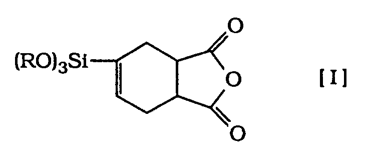
wherein R represents a C₁-C₄-alkyl group and 4-(dimethoxymethyl)silyl-1,2,3,6-tetrahydrophthalic acid anhydride.

Another object of the present invention is a process for producing these compounds by reacting a 2-substituted-1,3-butadiene represented by the structural formula [II] 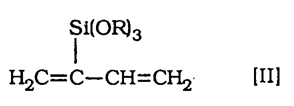
wherein R represents a C₁-C₄-alkyl group or 2-(dimethoxymethyl)silyl-1,3-butadiene with maleic anhydride.

The above mentioned structural formula [I] covering the 4-substituted-1,2,3,6-tetrahydrophthalic acid anhydride can specifically include, for example:
4-(trimethoxy)silyl-1,2,3,6-tetrahydrophthalic acid anhydride,
4-(triethoxy)silyl-1,2,3,6-tetrahydrophthalic acid anhydride,
4-(tripropoxy)silyl-1,2,3,6-tetrahydrophthalic acid anhydride, and
4-(tributoxy)silyl-1,2,3,6-tetrahydrophthalic acid anhydride.

The process of the present invention for the manufacture of the 4-substituted 1,2,3,6-tetrahydrophthalic acid anhydrides of the structural formula [I] comprises a Diels-Alder reaction between a 2-substituted-1,3-butadiene represented by the structural formula [II] with maleic acid anhydride [III] according to the following formula (A):

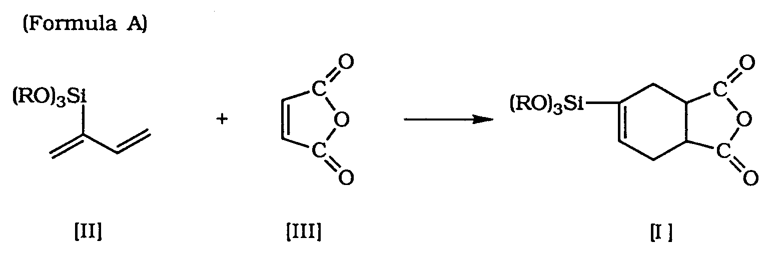

While the Diels-Alder reaction represented by the formula (A) can be proceeded sufficiently with no solvent, chloroform, benzene, toluene, xylene, cyclohexane, ethyl ether, dioxane, tetralin, tetrahydrofuran or like other solvent may be used if required. Further, while the reaction is usually carried out at ambient temperature it can be carried out at the refluxing temperature of the solvent employed. Furthermore, the reaction time may range from 30 minutes to 10 hours and a catalyst such as tin chloride and boron trifluoride may be used in the reaction.

In the reaction of the formula (A), the 2-substituted-1,3-butadiene [II] used as the starting material can be prepared by using 1,4-dichloro-2-substituted-2-butene obtained by the process as shown in the formula (B), that is, the reaction between 1,4-dichloro-2-butyne [IV] and silane compound [V], wherein X represents a halogen atom and n is an integer 0 or 1.

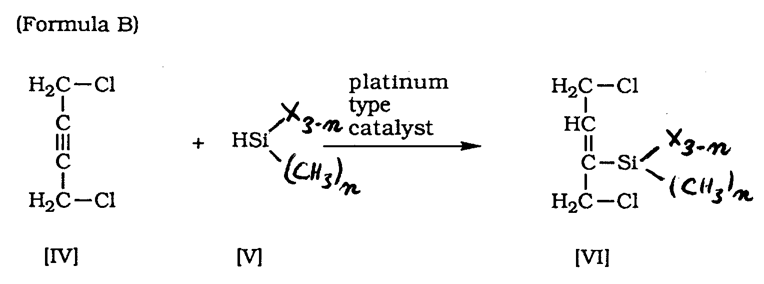

For instance, 2-trichlorosilyl-1,3-butadiene [II-b] and 2-C₁-C₄-trialkoxy silyl-1,3-butadiene [II-a] can be synthesized by reacting 1,4-dichloro-2-butyne [IV] and trichlorosilane [V] in the presence of a platinum type catalyst to obtain 1,4-dichloro-2-(trichloro)silyl-2-butene [VI], then reacting the 1,4-dichloro-2-(trichloro)silyl-2-butene [VI] with Zn in tetrahydrofuran to prepare 2-(trichloro)silyl-1,3-butadiene [II-b], and further reacting the 2-(trichloro)silyl-1,3-butadiene [II-b] with a C₁-C₄-alcohol in the presence of a base, far example, triethylamine as shown by the following formula (C):

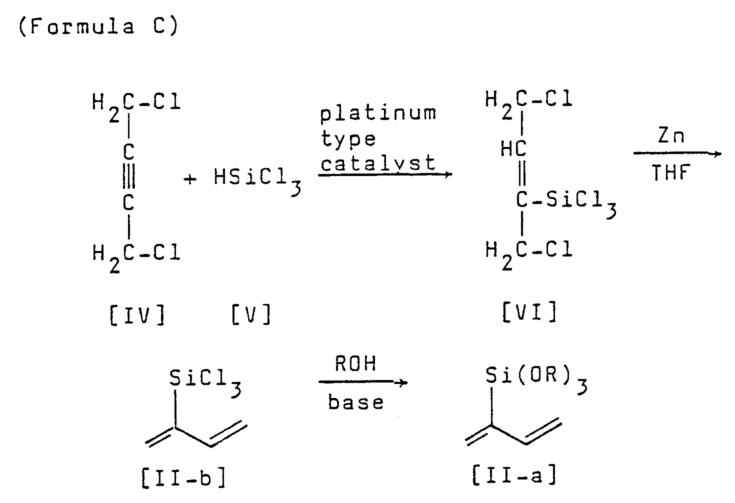

In formula (C), R represents a C₁-C₄-alkyl group.

Further, 2-(C₁-C₄-trialkoxy)-1,3-butadiene [II-a] can also be prepared by reacting 1,4-dichloro-2-(trichloro)silyl-2-butene [VI] with a C₁-C₄-alcohol in the presence of triethylamine in tetrahydrofuran to form 1,4-dichloro-2-(C₁-C₄-trialkoxy)silyl-2-butene [VII], and treating the formed 1,4-dichloro-2-(C₁-C₄-trialkoxy)silyl-2-butene [VII] with Zn in tetrahydrofuran as shown by the following formula (D):

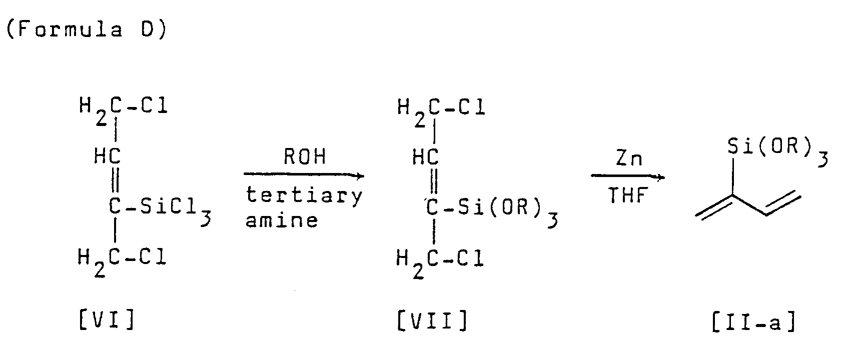

In formula (D), R represents a C₁-C₄-alkyl group.

Furthermore, 2-(C₁-C₄-trialkoxy)-1,3-butadiene [II-a] can also be prepared by reacting 1,4-dichloro-2-butyne [IV] with a C₁-C₄-trialkoxy silane in the presence of a platinum type catalyst to form 1,4-dichloro-2-(C₁-C₄-trialkoxy)silyl-2-butene [VII] directly and then treating the thus formed butene derivative with Zn in a lower alcohol solvent as shown by the following formula (E):

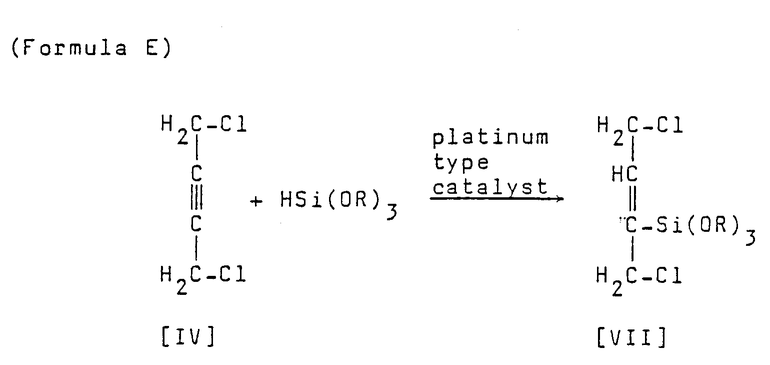

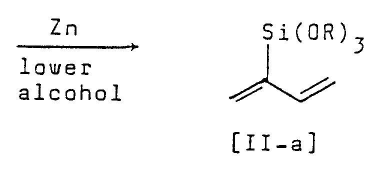

In formula (E), R represents a C₁-C₄-alkyl group.

In addition, an example of the starting material 2-substituted-1,3-butadiene, 2-(dimethoxymethyl)silyl -1,3-butadiene may be synthesized in the same manner as in the formula (D) by using 1,4-dichloro-2-(dimethoxymethyl)silyl -2-butene.

The novel material according to this invention, that is, the 4-substituted-1,2,3,6-tetrahydrophthalic acid anhydrides, represented by the above formula [I], can be used for various application uses such as a starting material for silicon-containing polyester resins, polyamide resins and addition type polyimide resins; silane coupling agents, particularly, coupling agents for polyimide resins; plasticizers for vinyl chloride resins, curing agents for epoxy resins.

This invention will now be described more specifically referring to examples.

### Example 1

To 0.36 g (2.1 mmol) of 2-(trimethoxy)silyl-1,3-butadiene [II], were added 0.19 g (1.9 mmol) of maleic acid anhydride [III] at room temperature and stirred for one hour. After the reaction was over, the reaction product was separated by chromatography using silica gel and developing with a mixed solvent of n-hexane-diethyl ether to obtain 0.44 g of 4-(trimethoxy)silyl-1,2,3,6-tetrahydrophthalic acid anhydride [I] (yield: 80%, liquid).
HNMR (CCl₄): Internal standard tetramethylsilane
δ 2.05-2.80 (m, 4H, 2CH₂), 3.28-3.43 (m, 2H, 2CH), 3.46 (s, 9H, 3CH₃OSi), 6.43-6.53 (m, 1H, CH=C)

### Example 2

64.2 g (0.65 mol) of maleic acid anhydride were dissolved into 65 g of benzene at 45°C, to which were added dropwise 120 g (0.69 mol) of 2-(trimethoxy)silyl-1,3-butadiene [II] slowly while maintaining the reaction temperature at 40-45°C. After the dropping was completed, stirring was continued for further one hour.

Then, benzene and unreacted 2-(trimethoxy)silyl-1,3-butadiene were distilled off under reduced pressure. After removing insoluble matters by filtration, the filtrate was fractionated to obtain 167 g of clear colorless 4-(trimethoxy)silyl-1,2,3,6-tetrahydrophthalic acid anhydride [I] (yield: 94%).

### Example 3

64.2 g (0.65 mol) of maleic acid anhydride were dissolved into 65 g of tetrahydrofuran at 45°C, to which were added dropwise 120 g (0.69 mol) of 2-(trimethoxy)silyl-1,3-butadiene [II] slowly while maintaining the reaction temperature at 40-45°C. After the dropping was completed, stirring was continued for further one hour.

Then, tetrahydrofuran and unreacted 2-(trimethoxy)silyl-1,3-butadiene were distilled off under reduced pressure. After removing insoluble matters through filtration, the filtrate was fractionated to obtain 160 g of clear colorless 4-(trimethoxy)silyl-1,2,3,6-tetrahydrophthalic acid anhydride [I] (yield: 90%).

A method of synthesizing 2-(trimethoxy)silyl-1,3-butadiene [II-a] is shown as a reference example.

### Reference Example 1

To a mixed solution of 15 ml (0.153 mol) of 1,4-dichloro-1-butyne [IV] and 13.6 ml (0.16 mol) of trichlorosilane (bp: 31-32°C) [V], were added 0.15 ml (10 mmol) of H₂PtCl₆·6H₂O in an isopropyl alcohol solution (0.05 g/ ml), which were heated for 8 hours. Then, it was directly distillated to obtain 37 g of 1,4-dichloro-2-(trichloro)silyl-2-butene [VI] (yield: 94%, bp: 70°C/1 mmHg).

Then, a mixture of 6.0 g (82 x 1.3 mmol) of Zn powder and 20 ml of THF was cooled to -15°C, to which was slowly added, under sufficient stirring, a mixed solution of 21.3 g (82 mmol) of 1,4-dichloro-2-(trichloro)silyl-2-butene [VI] and 10 ml of THF. Then, stirring was effected at -15°C for one hour and 60 ml of dry pentane were added. After filtering the deposited ZnCl₂ and removing the solvent through the distillation under a reduced pressure at low temperature (-20°C), 13 g of 2-(trichloro)silyl-1,3-butadiene [II-b] were obtained (yield: 85%).

Further, a mixed solution of 8.7 g of the 2-(trichloro)silyl-1,3-butadiene [II-b] (46 mmol of crude product) and 10 ml of THF was cooled to -10°C and, while stirring sufficiently, a mixed solution of 8.3 ml (46 x 3 x 1.5 mmol) of CH₃OH and 28.9 ml (46 x 3 x 1.5 mmol) of (C₂H₅)₃N were slowly added dropwise. Then, the solution was stirred at room temperature for 30 minutes and 30 ml of (C₂H₅)₂O were added. The deposited (C₂H₅)₃N·HCl was filtered off and the solvent was distilled off under reduced pressure and 6.1 g of 2-(trimethoxy)silyl-1,3-butadiene [II-a] were obtained by distillation (yield: 75%).

### Reference Example 2

A solution of 14.2 g (55 mmol) of 1,4-dichloro-2-(trichloro)silyl-2-butene [VI] in 7 ml of THF was cooled to -10°C, to which was slowly added dropwise a mixed solution of 10 ml of CH₃OH (55 x 3 x 1.5 mmol) and 34.5 ml of (C₂H₅)₃N (55 x 3 x 1.5 mmol). Then, it was stirred at room temperature for one hour and 30 ml of dry ether were added. After filtering out the deposited (C₂H₅)₃N·HCl and removing the solvent through distillation under reduced pressure, 10.8 g of 1,4-dichloro-2-(trimethoxy)silyl-2-butene [VII] were obtained (yield: 80%, bp: 88-90°C/1-2 mmHg).

Then, while stirring 4.0 g (41 x 1.5 mmol) of Zn powder and 15 ml of THF sufficiently, 10 g (41 mmol) of 1,4-dichloro-2-(trimethoxy)silyl-2-butene [VII] prepared by the method as described above were added. After heating the mixed solution under reflux for one hour, it was cooled to room temperature and 30 ml of dry pentane were added for deposition. After filtering off the deposited ZnCl₂ and removing the solvent through distillation under reduced pressure, 5.0 g of 2-(trimethoxy)silyl-1,3-butadiene [II-a] were obtained by distillation (yield: 70%, bp: 24°C/1 mmHg).

## Claims

1. A 4-substituted-1,2,3,6-tetrahydrophthalic acid anhydride represented by the structural formula [I] 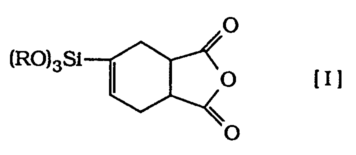 wherein R represents a C₁-C₄-alkyl group.

2. 4-(Dimethoxymethyl)silyl-1,2,3,6-tetrahydrophthalic acid anhydride.

3. A process for producing the compounds according to claims 1 and 2, **characterized by** reacting a 2-substituted-1,3-butadiene represented by the structural formula [II] 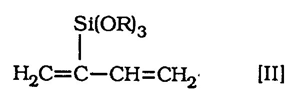 wherein R represents a C₁-C₄-alkyl group or 2-(dimethoxymethyl)silyl-1,3-butadiene with maleic anhydride.

## Patentansprüche

1. 4-Substituiertes 1,2,3,6-Tetrahydrophthalsäureanhydrid der Strukturformel (I) 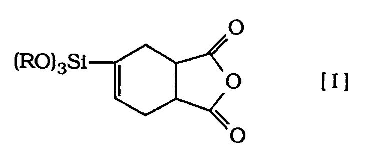 worin R eine C₁-C₄-Alkylgruppe bedeutet.

2. 4-(Dimethoxyethyl)-silyl-1,2,3,6-tetrahydrophthalsäureanhydrid.

3. Verfahren zur Herstellung der Verbindungen nach den Ansprüchen 1 und 2, **dadurch gekennzeichnet,** daß man ein 2-substituiertes1,3-Butadien der Strukturformel (II) 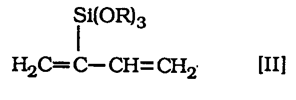 worin R eine C₁-C₄-Alkylgruppe bedeutet oder 2-(Dimethoxymethyl)-silyl-1,3-butadien mit Maleinsäureanhydrid umsetzt.

## Revendications

1. Anhydride 1,2,3,6-tétrahydrophtalique substitué en position 4 représenté par la formule développée [I] 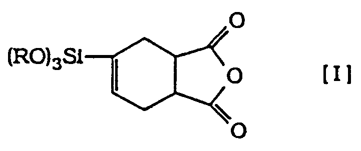 dans laquelle R représente un groupe alkyle en C₁-C₄.

2. Anhydride 4-diméthoxyméthylsilyl-1,2,3,6-tétrahydrophtalique.

3. Procédé de préparation des composés selon les revendications 1 et 2, caractérisé par la réaction d'un 1,3-butadiène substitué en position 2 représenté par la formule développée [II] 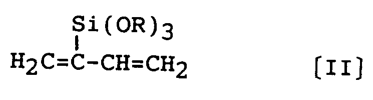 dans laquelle R représente un groupe alkyle en C₁-C₄, ou du 2-diméthoxyméthylsilyl-1,3-butadiène, avec l'anhydride maléique.
